**Europäisches Patentamt**

**European Patent Office**

**Office européen des brevets**

(19)

(11) Veröffentlichungsnummer: **0 044 469**
**A1**

(12) # EUROPÄISCHE PATENTANMELDUNG

(21) Anmeldenummer: **81105319.8**

(22) Anmeldetag: **09.07.81**

(51) Int. Cl.³: **F 16 B 2/22**
**E 04 B 1/38**

(30) Priorität: **22.07.80 DE 8019598 U**

(43) Veröffentlichungstag der Anmeldung:
**27.01.82 Patentblatt 82/4**

(84) Benannte Vertragsstaaten:
**AT BE CH DE FR LI LU**

(71) Anmelder: **NORDROHR Kunststoffröhrenwerk GmbH & Co KG**
**Deichstrasse 6**
**D-2200 Elmshorn(DE)**

(72) Erfinder: **Lippe, Manfred**
**Kirchdorf 9**
**D-2200 Neuendorf(DE)**

(74) Vertreter: **Glawe, Richard, Dr. Dipl.-Ing. et al,**
**Glawe, Delfs, Moll & Partner Rothenbaumchaussee 58**
**D-2000 Hamburg 13(DE)**

(54) **Klammer zum Befestigen von Fussbodenheizungsrohren.**

(57) Die Klammer kann von oben sowohl auf Halteleisten (6) als auch auf Drähten (8) eines Baustahlgewebes aufgesetzt und dort durch Klemmvorsprünge (5) bzw. aufgrund der besonderen Form von Einschnitten (7) festgehalten werden. Die Einschnitte (7) sind dabei so ausgebildet, daß bei Kreuzungspunkten des Baustahlgewebes die Klammer in zwei zueinander senkrechten Stellungen auf dasselbe aufgesetzt werden kann. Die Fußboden-Heizungsrohre (3) können in zwei zueinander senkrechten Orientierungen von oben in die Klammer eingesetzt werden und werden dort durch 4 mit kreuzförmigen Zwischenräumen angeordnete Haltevorsprünge (2) festgehalten.

Fig. 2

EP 0 044 469 A1

## Beschreibung

Die Erfindung betrifft eine Klammer zum Befestigen von Fußboden-Heizungsrohren an einer Halteleiste, bestehend aus einem Basisteil, einem auf dessen Oberseite vorgesehenen Halteteil für die Rohre, der von derselben sich erstreckende Haltevorsprünge aufweist, und einem von dem Basisteil nach unten abstehenden Paar von Klemmvorsprüngen zum Festklemmen auf der Halteleiste, wobei Einschnitte zum Aufnehmen von Drähten eines Baustahlgewebes vorgesehen sind.

Mit einer Klammer dieser Art (DE-GM 75 30 180) können Fußboden-Heizungsrohre an Halteleisten wie z.B. Bandeisen oder aber an den Drähten eines Baustahlgewebes befestigt werden.

Diese vorbekannte Klammer hat jedoch verschiedene Nachteile. Sind Bandeisen für das Festhalten der Klammern und der Heizungsrohre vorgesehen, so können die Heizungsrohre nur in einem vorgegebenen Winkel relativ zu den Bandeisen befestigt werden, wenn man nicht für verschiedene Winkel verschiedene Klammern vorsehen will, was natürlich größere Lagerhaltung, größere Kosten und längere Arbeitszeit beim Heraussuchen der richtigen Klammern bedeuten würde. Wenn z.B. eine Art von Klammern vorgesehen ist, mit denen die Heizungsrohre senkrecht zu den Bandeisen angeordnet werden können, so müßte, wenn auch parallele Anordnung gewünscht wird, noch ein zweiter Satz entsprechender Klammern vorgesehen sein.

Wird die vorbekannte Klammer auf Drähte eines Baustahlgewebes gesetzt, so sind zwar zwei verschiedene Winkeleinstellungen zwischen den Drähten und den Heizungsrohren möglich. Zur Änderung dieser Winkeleinstellung ist es jedoch erforderlich, die Klammer so zu versetzen, daß sie in die richtige Richtung zeigt.

Ein weiterer Nachteil der vorbekannten Klammer besteht darin, daß sie von unten an dem Baustahlgewebe befestigt werden muß. Dies bedeutet einmal die umständliche Arbeit, zunächst das Baustahlgewebe anzuheben, was noch dadurch erschwert wird, daß der Arbeiter auf diesem Baustahlgewebe steht. Er muß also sozusagen einen Teil seines Gewichtes anheben. Außerdem besteht die Gefahr, daß beim Unterschieben der Klammern die darunterliegende Isolierabdeckung wie z. B. Bitumenpappe oder Polyäthylenfolie beschädigt wird.

Die Aufgabe der Erfindung besteht darin, eine verbesserte Klammer der eingangs genannten Art zu schaffen, die leichter anzubringen und vielseitiger zu verwenden ist.

Die erfindungsgemäße Lösung besteht darin, daß vier mit kreuzförmigen Zwischenräumen angeordnete Haltevorsprünge vorgesehen sind, daß die Einschnitte für die Aufnahme von Drähten des Baustahlgewebes auf der Unterseite des Basisteiles in den Klemmvorsprüngen vorgesehen sind, und daß jeder dieser beiden Einschnitte zwei übereinander angeordnete Erweiterungen aufweist.

Während die vorbekannte Klammer zwei längliche Haltevorsprünge hatte, zwischen denen das Rohr in der Richtung der Längserstreckung der Haltevorsprünge eingeklemmt wurde, sind hier vier Haltevorsprünge vorgesehen. Das Rohr kann zwischen diese vier Haltevorsprünge in einer ersten Stellung und einer zweiten dazu senkrechten Stellung eingeklemmt werden. Es befinden sich dann jeweils auf jeder Seite des Rohres zwei Haltevorsprünge, während das Rohr an zwei Stellen von auf verschiedenen Seiten des Rohres angeordneten Haltevorsprüngen festgehalten wird. Man braucht daher beim Aufstecken der Klammern auch die Bandeisen oder die Drähte des Baustahlgewebes noch nicht zu berücksichtigen, ob die Rohre in einer Richtung oder in einer dazu senkrechten Richtung später befestigt werden sollen. Man kann die Klammern vielmehr in der Stellung

3

0044469

oder dazu um 90° gedrehten Stellung aufstecken, die gerade
am günstigsten ist.

Dadurch, daß die Einschnitte für die Aufnahme von Drähten des
Baustahlgewebes auf der unteren Seite des Basisteils und
zwar in den Klemmvorsprüngen vorgesehen sind, können die
Klammern von oben auf die Drähte des Baustahlgewebes aufgesteckt werden. Die Einschnitte weisen dabei Erweiterungen
auf, die dem Querschnitt des Drahtes entsprechen, so daß an
diesen Erweiterungen die Klammer den Draht bzw. der Draht
die Klammer sehr gut festhält. Die Klammer wird dabei eine
gewisse Elastizität haben, so daß sie nach dem Aufschieben
auf die Drähte, wenn dieselben die Erweiterungen erreichen,
einschnappt. Es sind dabei zwei übereinander angeordnete Erweiterungen vorgesehen, was von Bedeutung ist, wenn die Klammer an Kreuzungspunkten des Baustahlgewebes befestigt werden
soll. Ist an diesem Kreuzungspunkt der Draht, über den die
Einschnitte geschoben werden, der obere, so kann die Klammer
so weit herabgedrückt werden, daß der Draht in der oberen
Erweiterung einrastet. Sollen jedoch die Einschnitte über
den unteren Draht geschoben werden, so wird die Klammer bis
zur unteren Erweiterung über den Draht geschoben. Auf diese
Weise verbleibt zwischen unterem Draht und einer Unterfläche
der Klammer noch Raum für die Aufnahme des oberen Drahtes an der Kreuzungsstelle.

Die Erweiterungen können kreisförmig begrenzte Aussparungen
sein. Diese Form ist besonders günstig der üblichen Form von
Baustahldrähten angepaßt, die im wesentlichen kreisförmigen
Querschnitt haben.

Die Erweiterungen jedes Einschnitts können einander unmittelbar benachbart sein. In diesem Falle entspricht der Abstand
der Mittelpunkte der Erweiterungen ungefähr dem Durchmesser

Glawe, Delfs, Moll & Partner - p 10078/81 -

der Erweiterung und damit dem Drahtdurchmesser. Eine Verschiebung von der unteren Erweiterung zur oberen Erweiterung entspricht daher der Dicke des Drahtes. Liegt bei Halten des Drahtes in der oberen Erweiterung der Draht an der Unterfläche
des Basisteiles an, so wird der obere Draht an einem Kreuzungspunkt ebenfalls an der Basisfläche anliegen, wenn der untere
Draht in den unteren Erweiterungen gehalten wird. In beiden
Fällen kann, wenn die Unterseite des Basisteiles hier oben
ist, das Klammerelement so gut gegen Kippen gesichert werden,
da es jedenfalls auf einer geraden Berührungslinie auf den
Draht aufliegt. Dies ist dann der Fall, wenn die oberen Erweiterungen an den basisteilseitigen Enden der Einschnitte
unmittelbar unter einer Unterfläche des Basisteils angeordnet
sind.

Die Unterfläche des Basisteils kann, bis auf die Klemmvorsprünge,
an sich eben gestaltet werden. Sie wird dabei zum Erzielen einer
entsprechenden Stabilität eine gewisse Mindestdicke haben. Es
kann jedoch auch vorgesehen sein, daß die Unterfläche des Basisteiles, an der der Draht anliegen kann, den Nutengrund von zwei
kreuzförmig in Richtung der Einschnitte bzw. senkrecht dazu auf
der Unterseite des Basisteils verlaufenden Nuten bildet. Auf
diese Weise wird erreicht, daß der Basisteil an zwei zueinander senkrechten Linien so geschwächt ist, daß er dort leichter
gebogen werden kann. Die Klammer kann so leichter über das
Baustahlgewebe geschoben werden. Die Einschnitte öffnen sich
nämlich leichter, da der gesamte Basisteil entsprechend deformiert wird. Dabei wird man natürlich die Restdicke des Basisteils so groß vorsehen, daß durch die Rückfederkraft ein genügend fester Halt der Klammer auf dem Draht des Baustahlgewebes sichergestellt ist. Eine zusätzliche Haltewirkung wird
erreicht, wenn im oberen Teil das Rohr aufgeschoben bzw. eingeschoben wird, da diese Deformation der Deformation durch den
eingeführten Baustahldraht entgegengesetzt ist. Außerdem wird

Glawe, Delfs, Moll & Partner - p 10078/81 -

5

durch diese Biegelinien natürlich auch das Aufschieben des
Rohres erleichtert. Schließlich wird selbstverständlich auch,
wenn die Klammer auf einen Bandstahl aufgeschoben wird, das
Aufschieben und Einschnappen hierdurch erleichtert. Die restliche Materialdicke des Basisteils sollte zur Erzielung eines
günstigen Biegeverhaltens im Bereich der Nuten ungefähr 2,5 mm
betragen.

Die Erfindung wird im folgenden beispielsweise anhand einer
vorteilhaften Ausführungsform unter Bezugnahme auf die Zeichnungen beschrieben. Es zeigen:

Fig. 1          eine Seitenansicht einer Klammer, die auf
                einen Bandstahl aufgeschoben ist und ein
                Heizungsrohr hält;

Fig. 2          eine um 90° gegenüber Fig. 1 gedrehte Seitenansicht einer Klammer, die im Kreuzungspunkt
                der Drähte auf ein Baustahlgewebe aufgeschoben
                ist;

Fig. 3          eine Ansicht von oben der erfindungsgemäßen
                Klammer; und

Fig. 4          eine vergrößerte Detailansicht der Klammer wie
                in der Stellung der Fig. 2, wobei die Klammer
                jedoch in anderer Weise auf den Kreuzungspunkt
                des Baustahlgewebes aufgesetzt ist.

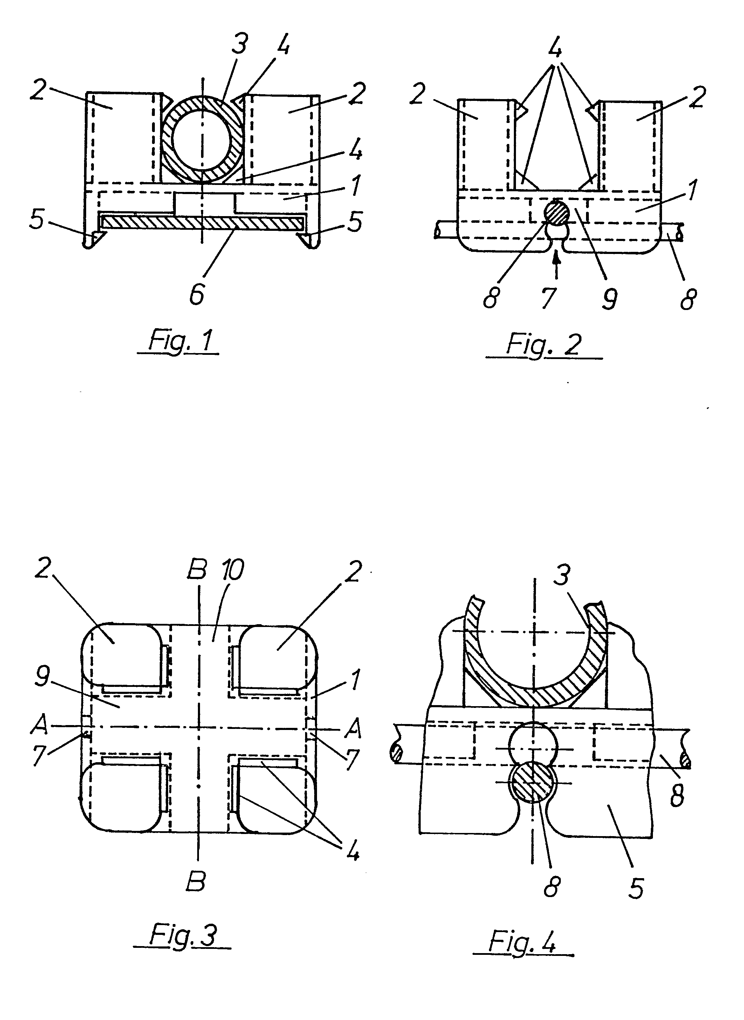

Die erfindungsgemäße Klammer weist einen im wesentlichen rechteckigen oder quadratischen plattenförmigen Basisteil 1 auf,
von dem sich nach oben an den Ecken vier Haltevorsprünge 2 erstrecken. Zwischen je zwei benachbarten Haltevorsprüngen befindet sich ein gleich großer Zwischenraum, zwischen denen ein
Heizungsrohr 3 festgehalten werden kann. Das Heizungsrohr kann
dabei in zwei Stellungen festgehalten werden, in denen seine
Achse die Richtung A-A oder B-B in Fig. 3 hat. Es können dabei noch Rastvorsprünge 4 an den    Haltevorsprüngen 2 vorgesehen sein, mit denen das Rohr zwischen den Haltevorsprüngen besser festgehalten wird. Unter der Basis befinden sich auf zwei gegenüberliegenden Längsseiten des Basisteils zwei Klemmvorsprünge 5 mit entsprechend hakenförmig ausgebildeten Unterkanten, die über eine Halteleiste 6 geschoben werden können, so daß die Klammer auf derselben einrastet. In der Mitte der Klemmvorsprünge 5 sind Einschnitte 7 mit zwei Erweiterungen vorgesehen, die ungefähr die Form wie die Querschnittsfläche von Baustahldrähten 8 haben.

In den Fig. 2 und 4 ist gezeigt, wie die Klammer auf zwei verschiedene Weisen auf den Kreuzungspunkt eines Baustahlgewebes gesetzt werden kann. Bei der Darstellung der Fig. 2 hält die obere Erweiterung den oberen Draht fest, der dabei in eine mittig in der Unterseite des Basisteils 1 verlaufende Nut 9 eindringt. Bei der anderen Stellung der Fig. 4 befindet sich der obere Draht des Baustahlgewebes, der nicht von dem Einschnitt 7 festgehalten wird, in der dazu senkrechten Nut 10, während der untere Draht des Baustahlgewebes durch die Einschnitte 7 mit der unteren Erweiterung festgehalten wird.

Durch die Nuten 9 bzw. 10 und die dadurch bewirkte Schwächung des Basisteils in diesen Bereichen wird eine erhöhte Biegbarkeit des Basisteiles etwa um die Linien A-A bzw. B-B in Fig. 3 bewirkt. Aufgrund dieser Biegbarkeit kann die Klammer leichter auf einen Bandstahl oder einen Baustahldraht aufgeschnappt werden. Außerdem kann aufgrund dieser Biegbarkeit leichter das Rohr in die Klammer eingeschoben werden.

GLAWE, DELFS, MOLL & PARTNER

PATENTANWÄLTE **0044469**
ZUGELASSENE VERTRETER BEIM EUROPÄISCHEN PATENTAMT

RICHARD GLAWE
DR.-ING.

KLAUS DELFS
DIPL.-ING.

ULRICH MENGDEHL
DIPL.-CHEM. DR. RER. NAT.

WALTER MOLL
DIPL.-PHYS. DR. RER. NAT.
ÖFF. BEST. DOLMETSCHER

HEINRICH NIEBUHR
DIPL.-PHYS. DR. PHIL. HABIL.

8000 MÜNCHEN 26
POSTFACH 37
LIEBHERRSTR. 20
TEL. (089) 22 65 48
TELEX 52 25 05 SPEZ

2000 HAMBURG 13
POSTFACH 25 70
ROTHENBAUM-
CHAUSSEE 58
TEL. (040) 4 10 20 08
TELEX 21 29 21 SPEZ

HAMBURG

NORDROHR
Kunststoffröhrenwerk
GmbH & Co. KG

2200 Elmshorn

Klammer zum Befestigen von
Fußboden-Heizungsrohren

- 7 -

p 10078/81 EU
Nb/sch

Patentansprüche

1. Klammer zum Befestigen von Fußboden-Heizungsrohren an
einer Halteleiste, bestehend aus einem Basisteil, einem
auf dessen Oberseite vorgesehenen Halteteil für die
Rohre, der von dem Basisteil sich erstreckende Haltevorsprünge aufweist, und einem von dem Basisteil nach unten
abstehenden Paar von Klemmvorsprüngen zum Festklemmen
auf der Halteleiste, wobei Einschnitte zum Aufnehmen von
Drähten eines Baustahlgewebes vorgesehen sind, dadurch
gekennzeichnet, daß vier mit kreuzförmigen Zwischenräumen
angeordnete Haltevorsprünge (2) vorgesehen sind, daß die
Einschnitte (7) für die Aufnahme von Drähten (8) des Baustahlgewebes auf der Unterseite des Basisteils (1) in den
Klemmvorsprüngen (5) vorgesehen sind, und daß jeder dieser
beiden Einschnitte (7) zwei übereinander angeordnete Erweiterungen aufweist.

0044469

Glawe, Delfs, Moll & Partner - p 10078/81 -

– 2 –

2. Klammer nach Anspruch 1, dadurch gekennzeichnet, daß die durch die Erweiterungen begrenzten Aussparungen kreisförmig sind.

3. Klammer nach Anspruch 1 oder 2, dadurch gekennzeichnet, daß die Erweiterungen jedes Einschnitts (7) aneinander unmittelbar benachbart sind.

4. Klammer nach einem der Ansprüche 1 bis 3, dadurch gekennzeichnet, daß die oberen Erweiterungen an den basisteilseitigen Enden der Einschnitte (7) unmittelbar unter einer Unterfläche des Basisteils (1) angeordnet sind.

5. Klammer nach Anspruch 4, dadurch gekennzeichnet, daß die Unterfläche den Nutengrund von zwei kreuzförmig in Richtung der Einschnitte (7) bzw. senkrecht davon auf der Unterseite des Basisteils (1) verlaufenden Nuten (9, 10) bildet.

6. Klammer nach Anspruch 5, dadurch gekennzeichnet, daß die restliche Materialdicke des Basisteils (1) im Bereich der Nuten (9, 10) ungefähr 2,5 mm beträgt.

Fig. 1

Fig. 2

Fig. 3

Fig. 4

Europäisches
Patentamt

**EUROPÄISCHER RECHERCHENBERICHT**

**0044469**
Nummer der Anmeldung

EP 81105319.8

| **EINSCHLÄGIGE DOKUMENTE** | | | **KLASSIFIKATION DER ANMELDUNG** (Int. Cl.³) |
|---|---|---|---|
| Kategorie | Kennzeichnung des Dokuments mit Angabe, soweit erforderlich, der maßgeblichen Teile | betrifft Anspruch | |
| A | CH - A5 - 595 596 (NORDROHR KUNST- STOFF RÖHREN- UND SPRITZGUSS H. ZEIGMEISTER KG) <br><br> + Gesamt + <br><br> ---- | 1 | F 16 B  2/22 <br> E 04 B  1/38 |

**RECHERCHIERTE SACHGEBIETE** (Int. Cl.³)

F 16 B  2/00
E 04 B  1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 28-09-1981 | ENDLER |